# EUROPEAN PATENT APPLICATION

(11) **EP 4 027 428 A1**
(43) Date of publication of application: **13.07.2022**
(21) Application number: 20860180.7
(22) Date of filing: 04.09.2020
(51) Int. Cl.: H01M 10/0566, H01M 10/0585, H01M 10/42, H01M 10/44, H01M 10/48, H02J 7/00, H02J 7/02

(54) **LITHIUM-ION BATTERY MODULE**

(30) Priority: 06.09.2019 JP 2019163178
(71) Applicant: APB Corporation, Tokyo 101-0041 (JP)
(72) Inventor: HORIE, Hideaki, Tokyo 101-0041 (JP); KAWASAKI, Yohji, Kyoto-shi, Kyoto 605-0995 (JP); MIZUNO, Yusuke, Kyoto-shi, Kyoto 605-0995 (JP)
(74) Representative: TBK
(86) International application number: PCT/JP2020/033697
(87) International publication number: WO 2021/045223

(57) **Abstract**

There is provided a technique having a constitution in which a state of an assembled battery can be managed while eliminating the need for connecting an electrical wire, which is the technique with which it is possible to identify which unit cell characteristic is exhibited by a specific optical signal, even in a case where, in a light guiding path through which optical signals from a plurality of light emitting units are transmitted, a plurality of corresponding optical signals collide with each other. There is provided a lithium ion battery module having a control unit that is configured to receive a characteristic signal representing a characteristic of a corresponding unit cell and to output a control signal obtained by encoding an identifier of the unit cell and the characteristic signal, the control unit being provided in each of the unit cells; a light emitting unit that outputs an optical signal responding to the control signal; and an optical waveguide that provides a common optical path for optical signals that are output from a plurality of the light emitting units.

## Description

### Technical Field

The present invention relates to an assembled battery and a lithium ion battery module.

### Background Art

As a power source of an electric vehicle and a hybrid electric vehicle and a power source of a portable electronic device, an assembled battery in which a plurality of unit cells of lithium ion battery are stacked is used (Patent Literature 1). In a case of charging an assembled battery, it is necessary to manage the charging so that no unit cell becomes overcharged.

Patent Literature 1 discloses that charging control is carried out by monitoring the voltage between terminals of each unit cell.

Patent Literature 1 discloses a charging device for charging an assembled battery in a battery pack, where a charging control unit of the charging device is connected to a voltage monitoring unit of the battery pack and controls the charging current value to be reduced when a voltage value between terminals, measured during charging, reaches a predetermined voltage value.

The voltage monitoring unit of the battery pack is electrically connected to each unit cell by a metal wire (a voltage detection line) in order to measure the voltage between terminals of each unit cell. In a case where each unit cell is electrically connected by a wire, there is a risk of short circuit between the unit cells, and in addition, a problem that, for example, the labor of wiring is troublesome may occur.

With the intention of solving such a problem, the inventors of the present invention found a constitution in which an electrical wire is not used, specifically, a constitution in which a light emitting unit that measures characteristics of each of unit cells to output an optical signal, based on the characteristics, to each of the unit cells included in an assembled battery, and a light receiving unit that collectively receives the optical signals that are output from the respective light emitting units are provided. According to the constitution found by the inventors, in a case where the optical signal received by the light receiving unit is analyzed (for example, analyzed by a data processing unit connected to the light receiving unit), it is possible to avoid a risk of short cut between the unit cells caused by connecting each of the unit cells with a wire as in the related art. In addition, the labor of wiring can be reduced, and the manufacturing cost of the assembled battery can be reduced.

By the way, the constitution found by the present inventors is such a constitution that an optical waveguide that provides a common optical path for optical signals that are output from the light emitting units provided in the respective unit cells is provided, and a plurality of optical signals that are introduced from one end of the optical waveguide and emitted from the other end thereof are collectively received by the light receiving unit. In this constitution, the plurality of optical signals can be received by the light receiving unit in a state of colliding with each other. In a case where the plurality of optical signals collide with each other, it is difficult to determine or estimate which characteristics the received optical signal exhibits, and thus it is necessary to solve this problem.

### Citation List

### Patent Literature

[PTL 1] PCT International Publication No. WO2009/119075
[PTL 2] Japanese Unexamined Patent Application, First Publication No. 2017-054703
[PTL 3] Japanese Unexamined Patent Application, First Publication No. H10-255805

### Summary of Invention

An object of the present invention is to provide a technique having a constitution in which a state of an assembled battery can be managed while eliminating the need for connecting an electrical wire, which is the technique with which it is possible to identify which unit cell characteristic is exhibited by a specific optical signal, even in a case where, in a light guiding path through which optical signals from a plurality of light emitting units are transmitted, a plurality of corresponding optical signals collide with each other.

The lithium ion battery module of the present invention is a lithium ion battery module characterized by having an assembled battery formed by connecting a plurality of unit cells, each of which includes a laminated unit and an electrolyte, the laminated uint consisting of one set of a positive electrode current collector, a positive electrode active material layer, a separator, a negative electrode active material layer, and a negative electrode current collector, which are laminated in order, where the lithium ion battery module includes a control unit that is configured to receive a characteristic signal representing a characteristic of a corresponding unit cell and to output a control signal obtained by encoding an identifier of the unit cell and the characteristic signal, and a light emitting unit that outputs an optical signal responding to the control signal, the control unit and the light emitting unit being provided in each of the unit cells; and an optical waveguide that provides a common optical path for optical signals that are output from a plurality of the light emitting units.

### Brief Description of Drawings

Fig. 1 is a partially cutaway perspective view schematically illustrating an example of a unit cell unit.
Fig. 2 is a perspective view schematically illustrating an example of a light emitting unit.
Fig. 3 is a partially cutaway perspective view schematically illustrating an example of an assembled battery.
Fig. 4 is a cross-sectional view taken along a line A-A of the assembled battery illustrated in Fig. 3.
Fig. 5 is a graph schematically showing the voltage of each unit cell constituting the assembled battery in a case where the assembled battery has repeatedly charged and discharged.
Fig. 6 is a partially cutaway perspective view schematically illustrating an example of a lithium ion battery module.
Fig. 7 is a functional block diagram pertaining to an optical communication system for a lithium ion battery module.

### Description of Embodiments

Hereinafter, the present invention will be described in detail. In the present specification, the lithium ion battery in a case of being described shall include a concept of a lithium ion secondary battery as well.

### [First embodiment: Assembled battery]

An assembled battery of the first embodiment is formed by connecting a plurality of unit cell units, each of which has a unit cell including one set of a laminated unit consisting of a positive electrode current collector, a positive electrode active material layer, a separator, a negative electrode active material layer, and a negative electrode current collector, which are laminated in order, and including an electrolytic solution, and has a light emitting unit that emits light using the unit cell as a power source, and the emission of the light emitting unit is controlled such that the power consumption amount changes in response to the voltage of the unit cell.

The assembled battery of the first embodiment aims to solve the following problems of the assembled batteries in the related art. More specifically, in the assembled battery (Patent Literature 1) in the related art, the performances of the plurality of unit cells included in the assembled battery are slightly different from each other, and the voltage value between terminals may be different for each unit cell.

In a case where constant current charging is carried out on the assembled battery disclosed in Patent Literature 1, it is considered a case where the voltage values between terminals of the unit cells before charging are different from each other. For example, it is assumed a case where a pre-charge voltage value of a unit cell A is 2.5 V and a pre-charge voltage value of a unit cell B is 2.0 V. In a case where an assembled battery including the unit cell A and the unit cell B is charged until the voltage value between terminals reaches 4.0 V, the voltage values of the unit cell A and the unit cell B both increase, and then charging is stopped at the timing when the voltage value of the unit cell A reaches 4.0 V. In this case, the voltage value of the unit cell B is 3.5 V, and thus there is room for further charging up to 4.0 V. However, in a case where the unit cell B is charged to more than 3.5 V, the unit cell A is overcharged, and thus further charging cannot be carried out anymore.

In addition, it is considered a case where discharging is carried out from the assembled battery charged in this manner, in which a pre-discharge voltage value of the unit cell A is 4.0 V and a pre-discharge voltage value of the unit cell B is 3.5 V. In a case where an assembled battery including the unit cell A and the unit cell B is charged until the voltage value between terminals reaches 2.0 V, the voltage values of the unit cell A and the unit cell B both decrease, and then discharging is stopped at the timing when the voltage value of the unit cell B reaches 2.0 V. In this case, the voltage value of the unit cell A is 2.5 V, and thus there is room for further discharging to 2.0 V. However, since the unit cell B cannot be discharged, the desired voltage value of the assembled battery as a whole cannot be obtained, whereby further discharging cannot be carried out anymore.

As described above, in a case where the voltage values between terminals of the plurality of unit cells constituting the assembled battery disclosed in Patent Literature 1 are different each other, charging and discharging become insufficient, and thus it is not possible to exhibit the battery capacity originally possessed by the assembled battery. As a result, there is a demand for an assembled battery in which the difference in voltage values between terminals of a plurality of unit cells are corrected and it is possible to exhibit the battery capacity originally possessed by the assembled battery.

For the purpose of solving the above-described problems of the assembled batteries in the related art, According to the assembled battery of the first embodiment, there is provided a technique with which the difference in voltage values between terminals of a plurality of unit cells are corrected and it is possible to exhibit the battery capacity originally possessed by the assembled battery.

The assembled battery of the first embodiment is formed by connecting a plurality of unit cell units, where each of the unit cell units has a unit cell and a light emitting unit. It is preferable that the unit cell units are connected in series in the assembled battery. First, a unit cell unit including a unit cell and a light emitting unit will be described.

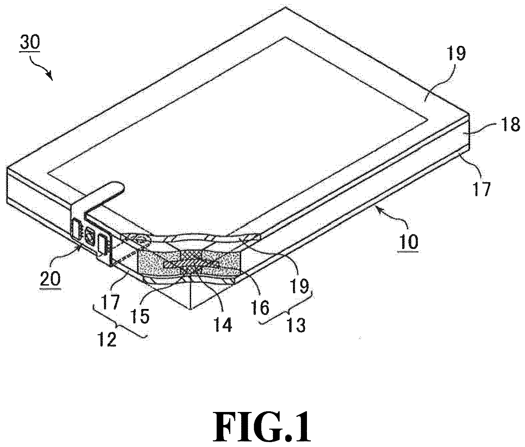

Fig. 1 is a partially cutaway perspective view schematically illustrating an example of a unit cell unit.

Fig. 1 is the view illustrating a unit cell unit 30 having a unit cell 10 which is a lithium ion battery and a light emitting unit 20. The unit cell 10 is constituted by laminating a positive electrode 12 having a positive electrode active material layer 15 formed on the surface of a positive electrode current collector 17 having a substantially rectangular flat plate shape, and a negative electrode 13 having a negative electrode active material layer 16 formed on the surface of a negative electrode current collector 19 having a similarly substantially rectangular flat plate shape, with a separator 14 having a similarly substantially flat plate shape being sandwiched therebetween, and is formed in a substantially rectangular flat plate shape as a whole. This positive electrode and this negative electrode function as the positive electrode and the negative electrode of the lithium ion battery.

The unit cell 10 has a ring-shaped frame member 18 that is disposed between the positive electrode current collector 17 and the negative electrode current collector 19 to fix the peripheral edge part of the separator 14 between the positive electrode current collector 17 and the negative electrode current collector 19, and seals the positive electrode active material layer 15, the separator 14, and the negative electrode active material layer 16.

The positive electrode current collector 17 and the negative electrode current collector 19 are positioned such that they are opposed to each other with a predetermined spacing by the frame member 18, and the positive electrode active material layer 15 and the negative electrode active material layer 16 are also positioned such that they are opposed to each other with the separator 14 being sandwiched therebetween, with a predetermined spacing by the frame member 18.

The spacing between the positive electrode current collector 17 and the separator 14 and the spacing between the negative electrode current collector 19 and the separator 14 is adjusted in response to the capacity of the lithium ion battery, and the positional relationship between these positive electrode current collector 17, the negative electrode current collector 19, and the separator 14 are determined such that a required spacing can be obtained.

Hereinafter, a preferred aspect of each component constituting the unit cell will be described. The positive electrode active material layer contains a positive electrode active material. Examples of the positive electrode active material include a composite oxide of lithium and a transition metal {a composite oxide having one kind of transition metal (LiCoO₂, LiNiO₂, LiAlMnO₄, LiMnO₂, LiMn₂O₄, or the like), a composite oxide having two kinds of transition metal elements (for example, LiFeMnO₄, LiNi₁₋ₓCoₓO₂, LiMn_{1-y}Co_{y}O₂, LiNi_{1/3}Co_{1/3}Al_{1/3}O₂, and LiNi_{0.8}CO_{0.15}Al_{0.05}O₂), or a composite oxide having three or more kinds of transition metal elements [for example, LiMₐM'_{b}M"_{c}O₂ (where M, M', and M" are transition metal elements different each other and satisfy a + b + c = 1, and one example is LiNi_{1/3}Mn_{1/3}Co_{1/3}O₂)], a lithium-containing transition metal phosphate (for example, LiFePO₄, LiCoPO₄, LiMnPO₄, or LiNiPO₄), a transition metal oxide (for example, MnO₂ and V₂O₅), a transition metal sulfide (for example, MoS₂ or TiS₂), and a conductive macromolecule (for example, polyaniline, polypyrrole, polythiophene, polyacetylene, poly-p-phenylene, or polyvinyl carbazole)}. Two or more thereof may be used in combination. Here, the lithium-containing transition metal phosphate may be one in which a part of transition metal sites is substituted with another transition metal.

The positive electrode active material is preferably a coated positive electrode active material coated with a conductive auxiliary agent and a coating resin. In a case where the periphery of the positive electrode active material is coated with a coating resin, the volume change of the electrode is alleviated, and thus the expansion of the electrode can be suppressed.

Examples of the conductive auxiliary agent include a metal-based conductive auxiliary agent [aluminum, stainless steel (SUS), silver, gold, copper, titanium, or the like], a carbon-based conductive auxiliary agent [graphite, or carbon black (acetylene black, Ketjen black, furnace black, channel black, thermal lamp black, or the like), or the like], and a mixture thereof. One kind of these conductive auxiliary agents may be used alone, or two or more kinds thereof may be used in combination. In addition, an alloy or metal oxide thereof may be used. Among them, aluminum, stainless steel, silver, gold, copper, titanium, a carbon-based conductive auxiliary agent, or a mixture thereof is more preferable, silver, gold, aluminum, stainless steel, or a carbon-based conductive auxiliary agent is still more preferable, and a carbon-based conductive auxiliary agent is particularly preferable, from the viewpoint of electrical stability. Further, these conductive auxiliary agents may be those obtained by coating a conductive material (preferably, a metallic conductive material among the conductive auxiliary agents described above) around a particle-based ceramic material or a resin material with plating or the like.

The shape (the form) of the conductive auxiliary agent is not limited to the particle form, may be a form other than the particle form, and may be a form practically applied as a so-called filler-based conductive auxiliary agent such as carbon nanofibers and carbon nanotubes.

The ratio of the coating resin to the conductive auxiliary agent is not particularly limited; however, from the viewpoints of the internal resistance of the battery and the like, the ratio (the coating resin (in terms of resin solid content weight):the conductive auxiliary agent) is preferably 1:0.01 to 1:50, and more preferably 1:0.2 to 1:3.0 in terms of weight ratio.

As the coating resin, it is possible to suitably use, for example, those described as the non-aqueous secondary battery active material coating resin, described in Patent Literature 2.

Further, the positive electrode active material layer may contain another conductive auxiliary agent in addition to the conductive auxiliary agent contained in the coated positive electrode active material. As the conductive auxiliary agent, the same one as the above-described conductive auxiliary agent contained in the coated positive electrode active material can be suitably used.

The positive electrode active material layer contains a positive electrode active material, and it is preferably a non-bound body that does not contain a binding agent that binds positive electrode active materials to each other. Here, the non-bound body means that the position of the positive electrode active material is not fixed by a binding agent (also referred to as a binder), and the positive electrode active materials, as well as the positive electrode active material and the current collector are not irreversibly fixed to each other.

The positive electrode active material layer may contain a pressure-sensitive adhesive resin. As the pressure-sensitive adhesive resin, it is possible to suitably use, for example, a resin obtained by mixing the non-aqueous secondary battery active material coating resin, described in Patent Literature 2, with a small amount of an organic solvent and adjusting the glass transition temperature thereof to room temperature or lower, and those described as pressure-sensitive adhesives in Patent Literature 3. Here, the pressure-sensitive adhesive resin means a resin having pressure-sensitive adhesiveness (an adhering property obtained by applying a slight pressure without using water, solvent, heat, or the like) without solidifying even in a case where a solvent component is volatilized and dried. On the other hand, a solution-drying type electrode binder, which is used as a binding material, means a binder that dries and solidifies in a case where a solvent component is volatilized, thereby firmly adhering and fixing active materials to each other. As a result, the solution-drying type electrode binder (the binding material) and the pressure-sensitive adhesive resin are different materials.

The thickness of the positive electrode active material layer is not particularly limited; however, it is preferably 150 to 600 µm and more preferably 200 to 450 µm from the viewpoint of battery performance.

The negative electrode active material layer contains a negative electrode active material. As the negative electrode active material, a known negative electrode active material for a lithium ion battery can be used. Examples thereof include a carbon-based material [graphite, non-graphitizable carbon, amorphous carbon, a resin sintered product (for example, a sintered product obtained by sintering and carbonizing a phenol resin, a furan resin, or the like), cokes (for example, a pitch coke, a needle coke, and a petroleum coke), a carbon fiber, or the like], a silicon-based material [silicon, silicon oxide (SiOₓ), a silicon-carbon composite body (a composite body obtained by coating surfaces of carbon particles with silicon and/or silicon carbide, a composite body obtained by coating surfaces of silicon particles or silicon oxide particles with carbon and/or silicon carbide, silicon carbide, or the like), a silicon alloy (a silicon-aluminum alloy, a silicon-lithium alloy, a silicon-nickel alloy, a silicon-iron alloy, a silicon-titanium alloy, a silicon-manganese alloy, a silicon-copper alloy, a silicon-tin alloy, or the like), or the like], a conductive macromolecule (for example, polyacetylene or polypyrrole), a metal (tin, aluminum, zirconium, titanium, or the like), a metal oxide (a titanium oxide, a lithium-titanium oxide, or the like), a metal alloy (for example, a lithium-tin alloy, a lithium-aluminum alloy, or a lithium-aluminum-manganese alloy), or the like, and a mixture of the above and a carbon-based material.

Further, the negative electrode active material may be a coated negative electrode active material coated with the same conductive auxiliary agent and coating resin as those of the above-described coated positive electrode active material. As the conductive auxiliary agent and the coating resin, the same conductive auxiliary agent and coating resin as those of the above-described coated positive electrode active material can be suitably used.

Further, the negative electrode active material layer may contain another conductive auxiliary agent in addition to the conductive auxiliary agent contained in the coated negative electrode active material. As the conductive auxiliary agent, the same one as the above-described conductive auxiliary agent contained in the coated positive electrode active material can be suitably used.

Like the positive electrode active material layer, the negative electrode active material layer is preferably a non-bound body that does not contain a binding material that binds negative electrode active materials to each other. In addition, as in the case of the positive electrode active material layer, a pressure-sensitive adhesive resin may be contained.

The thickness of the negative electrode active material layer is not particularly limited; however, it is preferably 150 to 600 µm and more preferably 200 to 450 µm from the viewpoint of battery performance.

Examples of the material constituting the positive electrode current collector and the negative electrode current collector (hereinafter, collectively referred to simply as the current collector) include metal materials such as copper, aluminum, titanium, stainless steel, nickel, and alloys thereof, and sintered carbon, a conductive macromolecule material, and conductive glass. Among these materials, aluminum is preferable as the positive electrode current collector, and copper is preferable as the negative electrode current collector, from the viewpoints of weight reduction, corrosion resistance, and high conductivity.

Further, the current collector is preferably a resin current collector consisting of a conductive macromolecule material. The shape of the current collector is not particularly limited, and the current collector may be a sheet-shaped current collector consisting of the above-described material or a deposited layer consisting of fine particles consisting of the above-described material. The thickness of the current collector is not particularly limited; however, it is preferably 50 to 500 µm.

As the conductive macromolecule material constituting the resin current collector, it is possible to use, for example, a conductive macromolecule or a material obtained by adding a conducting agent to a resin, as necessary. As the conducting agent constituting the conductive macromolecule material, the same one as the above-described conductive auxiliary agent contained in the coated positive electrode active material can be suitably used.

Examples of the resin constituting the conductive macromolecule material include polyethylene (PE), polypropylene (PP), polymethylpentene (PMP), polycycloolefin (PCO), polyethylene terephthalate (PET), polyether nitrile (PEN), polytetrafluoroethylene (PTFE), styrene butadiene rubber (SBR), polyacrylonitrile (PAN), polymethylacrylate (PMA), polymethylmethacrylate (PMMA), polyvinylidene fluoride (PVdF), an epoxy resin, a silicone resin, and a mixture thereof. From the viewpoint of electrical stability, polyethylene (PE), polypropylene (PP), polymethylpentene (PMP), or polycycloolefin (PCO) is preferable, and polyethylene (PE), polypropylene (PP), or polymethylpentene (PMP) is more preferable.

Examples of the separator include known separators for a lithium ion battery, such as a porous film consisting of polyethylene or polypropylene, a lamination film of a porous polyethylene film and a porous polypropylene, a non-woven fabric consisting of a synthetic fiber (a polyester fiber, an aramid fiber, or the like), a glass fiber, or the like and those above of which the surface is attached with ceramic fine particles such as silica, alumina, or titania.

The positive electrode active material layer and the negative electrode active material layer contain an electrolytic solution. As the electrolytic solution, a known electrolytic solution containing an electrolye and a non-aqueous solvent, which is used in the manfufacturing of the known lithium ion battery, can be used.

As the electrolyte, an electrolyte that is used in a known electrolytic solution can be used. Examples thereof include lithium salts of inorganic acids, such as LiN(FSO₂)₂, LiPF₆, LiBF₄, LiSbF₆, LiAsF₆, and LiClO₄; and lithium salts of organic acids, such as LiN(CF₃SO₂)₂, LiN(C₂F₅SO₂)₂, and LiC(CF₃SO₂)₃. Among these, an imide-based electrolyte [LiN(FSO₂)₂, LiN(CF₃SO₂)₂, LiN(C₂F₅SO₂)₂, or the like] or LiPF₆ is preferable from the viewpoints of battery output and charging and discharging cycle characteristics.

As the non-aqueous solvent, a non-aqueous solvent that is used in the known electrolytic solution can be used, and for example, a lactone compound, a cyclic or chain-like carbonic acid ester, a chain-like carboxylic acid ester, a cyclic or chain-like ether, a phosphoric acid ester, a nitrile compound, an amide compound, a sulfone, or a sulfolane, or a mixture thereof can be used.

The electrolyte concentration of the electrolytic solution is preferably 1 to 5 mol/L, more preferably 1.5 to 4 mol/L, and still more preferably 2 to 3 mol/L. In a case where the electrolyte concentration of the electrolytic solution is less than 1 mol/L, sufficient input/output characteristics of the battery may not be obtained, and in a case where it is more than 5 mol/L, the electrolyte may precipitate. The electrolyte concentration of the electrolytic solution can be checked by extracting the electrode for a lithium ion battery or the electrolytic solution constituting a lithium ion battery without using a solvent or the like and measuring the concentration thereof.

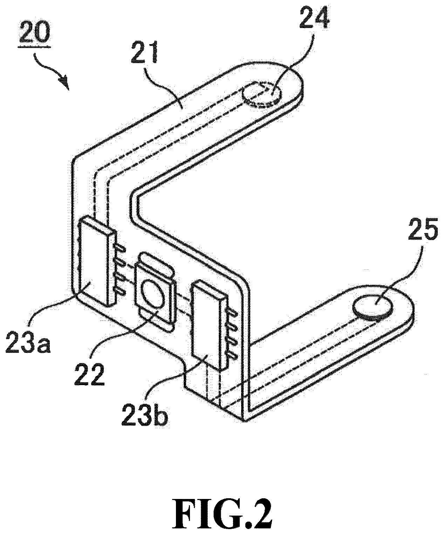

Next, the light emitting unit will be described. Fig. 2 is a perspective view schematically illustrating an example of a light emitting unit. The light emitting unit 20 illustrated in Fig. 2 has a wiring board 21 having a wire in the side or on the surface thereof, and has a light emitting element 22 and control elements 23a and 23b, which are mounted on the wiring board 21. Further, voltage measuring terminals 24 and 25 are provided at the end part the wiring board. The voltage measuring terminals 24 and 25 are respectively provided at positions where one of the voltage measuring terminals comes into contact with the positive electrode current collector and the other voltage measuring terminal thereof comes into contact with the negative electrode current collector in a case of being connected to the unit cell. That is, the voltage measuring terminals 24 and 25 respectively serve as voltage measuring terminals for measuring the voltage between the positive electrode current collector and the negative electrode current collector of the unit cell.

The voltage measuring terminals 24 and 25 are electrically connected to the control elements 23a and 23b, respectively, and the control elements 23a and 23b are electrically connected to the light emitting element 22. The emission of the light emitting unit 20 is controlled such that the power consumption amount changes in response to the voltage of the unit cell. The specific control of the light emission will be described later.

It is noted that a measuring terminal (not illustrated in the drawing) may be provided on a surface of the wiring board 21, where the surface corresponds to a surface on the back side of the light emitting element 22. This measuring terminal can be used as a temperature measuring terminal by being connected to a temperature sensor for measuring the temperature of the unit cell, or as a terminal for measuring physical changes in the unit cell by being connected to a strain gauge, a piezoelectric element, or the like. These measuring terminals are also electrically connected to the control elements 23a and 23b, respectively, and the control elements 23a and 23b are electrically connected to the light emitting element 22. The emission of the light emitting unit 20 is, for example, controlled such that the power consumption amount changes in response to the temperature of the unit cell.

A rigid board or a flexible board can be used as the wiring board constituting the light emitting unit. In a case where the shape of the wiring board is as illustrated in Fig. 2, it is preferable to use a flexible board. Any semiconductor element such as an IC or LSI can be used as the control element. Further, although Fig. 2 is the view illustrating an example in which two control elements are mounted, the number of control elements is not limited, and it may be one or three or more. As the light emitting element, it is possible to use an element capable of converting an electric signal into an optical signal, such as an LED element or an organic EL element, and an LED element is preferable. It is not essential that the light emitting unit has a wiring board, and the light emitting unit may be constituted such that the control element and the light emitting element are connected to each other without sandwiching a board therebetween.

The light emitting unit is electrically connected to the negative electrode current collector and the positive electrode current collector of the unit cell, and it is configured to be capable of receiving power supply from the lithium ion battery. In a case where the light emitting unit is electrically connected to the negative electrode current collector and the positive electrode current collector, the light emitting element can be caused to emit light by receiving power supply from the lithium ion battery. Although the electrode for receiving power supply is not illustrated in Fig. 2, it is preferable to provide an electrode different from the voltage measuring terminal in the light emitting unit.

Further, the negative electrode current collector and the positive electrode current collector are preferably a resin current collector, and the negative electrode current collector and the positive electrode current collector are preferably directly bonded to the electrodes of the light emitting unit and thus electrically connected to each other. In a case where a resin current collector is used, the resin current collector and the electrode of the light emitting unit are brought into contact with each other, and the resin current collector is heated so that the resin becomes softened, whereby the resin current collector and the electrode of the light emitting unit are directly bonded to each other. Further, another conductive bonding material such as solder can be sandwiched between the current collector and the light emitting unit, thereby being electrically connected.

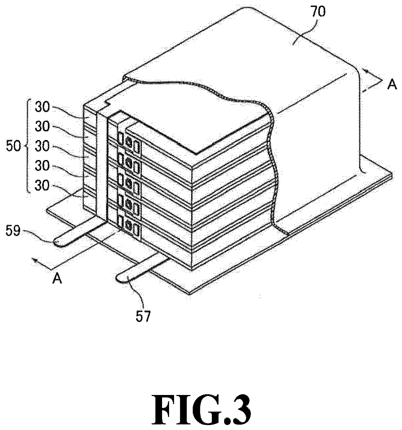

The assembled battery of the present invention is formed by connecting a plurality of unit cell units as described above. Fig. 3 is a partially cutaway perspective view schematically illustrating an example of an assembled battery. Fig. 3 is the view in which a part of the exterior body is removed in order to explain the constitution of the assembled battery. Fig. 3 is the view illustrating a form in which an exterior body 70 is provided in the assembled battery 50. An assembled battery 50 is formed by connecting a plurality of the unit cell units 30. Fig. 3 is the view illustrating the assembled battery 50 in which five unit cell units 30 illustrated in Fig. 1 are stacked. In the assembled battery 50, the upper surface of the negative electrode current collector 19 and the lower surface of the positive electrode current collector 17 of the adjacent unit cells 10 are laminated to be adjacent to each other. In this case, a plurality of the unit cell units 30 are connected in series.

On the outer surface (the side surface) of the assembled battery 50, the light emitting units 20 provided in the respective unit cell units 30 are arranged up in a row. Although Fig. 3 is the view illustrating a form in which the light emitting units 20 are arranged in a row, the positional relationship of the light emitting units between different unit cell units is not limited, and the light emitting units may be provided on different side surfaces of the unit cell units or the positions thereof may be incorrectly aligned on the same side surface.

The assembled battery 50 is accommodated in the exterior body 70. As the exterior body, a metal can case, a macromolecule metal composite film, or the like can be used.

A conductive sheet is provided on the negative electrode current collector 19 on the uppermost surface of the assembled battery 50, and a part of the conductive sheet is led out from the exterior body 70 to serve as a lead-out wire 59. Further, a conductive sheet is provided on the positive electrode current collector 17 on the lowermost surface of the assembled battery 50, and a part of the conductive sheet is led out from the exterior body 70 to serve as a lead-out wire 57. The conductive sheet is not particularly limited as long as it is a material having conductivity, and a metal material such as copper, aluminum, titanium, stainless steel, nickel, or an alloy thereof, or a material described as the resin current collector can be appropriately selected and used. The lead-out wire can be used to charge the assembled battery and discharge the assembled battery.

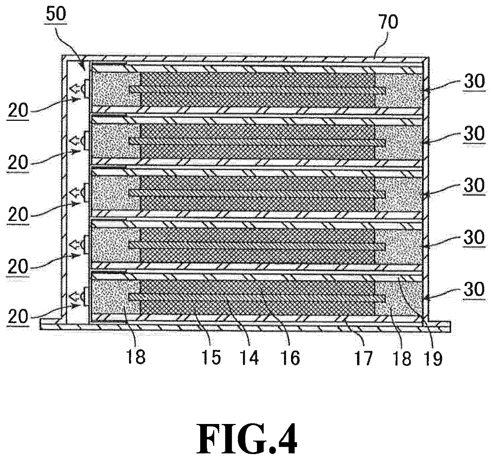

Fig. 4 is a cross-sectional view taken along a line A-A of the assembled battery illustrated in Fig. 3. Fig. 4 is the view also illustrating the exterior body 70 that accommodates the assembled battery 50. The light emitting unit 20 provided in the unit cell unit 30 emits light in response to the voltage of the unit cell; however, since this light is emitted for power consumption of the unit cell, the light stays in the exterior body 70 and does not go out of the exterior body. Fig. 4 is the view illustrating a state where the light emitting unit 20 emits light inside the exterior body 70 and the light does not go out of the exterior body.

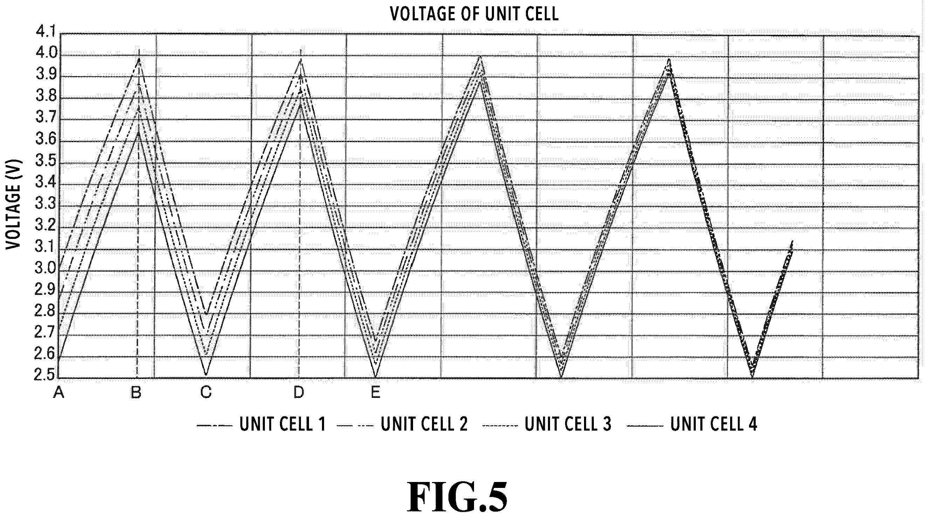

The control of light emission in the assembled battery of the first embodiment will be described. Hereinafter, the effect of the present invention will be described by taking as an example a case where charging is carried out until the charge voltage reaches 4.0 V, and then discharging is carried out until the discharge voltage reaches 2.5 V. Fig. 5 is a graph schematically showing the voltage of each unit cell constituting the assembled battery in a case where the assembled battery has repeatedly charged and discharged. Fig. 5 is the graph showing the voltage changes in the four unit cells of a unit cell 1, a unit cell 2, a unit cell 3, and a unit cell 4. There is a difference in the voltage of these four unit cells in the initial state thereof, where the voltage of the unit cell 1 is the highest and is at about 3.0 V, and the voltage of the unit cell 4 is the lowest and is at about 2.6 V. The difference in voltage between the unit cells is about 0.4 V. Each of the voltages of the unit cell 2 and the unit cell 3 is between the voltage of the unit cell 1 and the voltage of the unit cell 4. This point is a point A.

In a case where the assembled battery is charged, the voltage of each unit cell is measured. The voltage of each unit cell increases as charging progresses. Then, charging is stopped at the timing when the voltage of the unit cell having the highest voltage value (in this case, the unit cell 1) reaches 4.0 V. This point is a point B.

Subsequently, discharging is carried out. The voltage of each unit cell decreases as discharging progresses. Then, discharging is stopped at the timing when the voltage of the unit cell having the lowest voltage value (in this case, the unit cell 4) reaches 2.5 V. This point is a point C.

In the charging process from the point A to the point B and the discharging process from the point B to the point C, the light emitting unit included in each unit cell unit emits light. The light emission of the light emitting unit is controlled such that the power consumption amount changes in response to the voltage of the unit cell. Preferably, the control is carried out such that the power consumption amount increases in a case where the voltage of the unit cell is high. In order to increase the power consumption amount, the light emission time may be configured to be long in a case where the voltage of the unit cell is high, or the light emission intensity may be configured to be high in a case where the voltage of the unit cell is high. In a case where the light emission time is configured to be long in a case where the voltage of the unit cell is high, the following control is considered in which, during a cycle of a unit time (for example, 100 s (100 seconds)), light is emitted for 1 s in a case where the voltage of the unit cell is high, light is emitted for 0.5 s in a case where the voltage thereof is a level of being intermediate, and light is emitted for 0.1 s in a case where the voltage thereof is low. Further, a predetermined pattern may be configured to be emitted in response to the measured voltage, where an example of the predetermined pattern includes a pattern in which a plurality of pulses having a predetermined time interval are emitted during a cycle of a unit time and the number of pulses per unit time is changed, and a predetermined pattern may be emitted in response to the measured voltage. These stages are not particularly limited.

In a case where the light emitting unit is caused to emit light during charging, the light emitting unit is caused to emit light while charging, which consumes power. In a case where the light emission of the light emitting unit is controlled such that the power consumption amount increases in a case where the voltage of the unit cell is high, the slope at which the voltage rises during charging becomes different for each unit cell. In the unit cell 1, in which the voltage of unit cell is high and the power consumption amount due to the light emission of the light emitting unit is large, since the power consumption amount of unit cell is large, the slope of the voltage rise during charging becomes relatively small. On the other hand, in the unit cell 4, in which the unit cell voltage is low and the power consumption amount due to the light emission of the light emitting unit is small, since the power consumption amount of the unit cell is small, the slope of the voltage rise during charging becomes relatively large. The voltage of the unit cell 1 becomes 4.0 V, and at the timing when charging is stopped (the point B), the voltage of the unit cell 4 becomes 3.65 V. That is, the difference in voltage between the unit cells is 0.35 V. Since the difference in voltage between the unit cells is 0.4 V in the initial state, the difference in voltage between the unit cell having the highest voltage and the unit cell having the lowest voltage is reduced by 0.05 V by one time of charging. In this way, the difference in voltage between the unit cell having the highest voltage and the unit cell having the lowest voltage is reduced in the period from the start of charging to the stop of charging.

In a case where the light emitting unit is caused to emit light during discharging, the power consumption associated with the light emission of the light emitting unit is added in addition to the power consumption associated with the original discharging, and thus the power consumption amount of the unit cell itself increases. Here, in a case where the light emission of the light emitting unit is controlled such that the power consumption amount increases in a case where the unit cell voltage is high, since the power consumption amount of the unit cell having a high unit cell voltage is relatively large, and the power consumption amount of the unit cell having a low unit cell voltage is relatively small, the slope at which the voltage drops during discharging becomes different for each unit cell. In the unit cell 1, in which the unit cell voltage is high and the power consumption amount due to the light emission of the light emitting unit is large, since the power consumption amount of unit cell is large, the slope of the voltage drop during discharging becomes relatively large. On the other hand, in the unit cell 4, in which the unit cell voltage is low and the power consumption amount due to the light emission of the light emitting unit is small, since the power consumption amount of unit cell is small, the slope of the voltage drop during discharging becomes relatively small. The voltage of the unit cell 4 becomes 2.5 V, and at the timing when discharging is stopped (the point C), the voltage of the unit cell 1 becomes 2.8 V. That is, the difference in voltage between the unit cells is 0.3 V. Since the difference in voltage between the unit cells is 0.35 V at the end of charging, the difference in voltage between the unit cell having the highest voltage and the unit cell having the lowest voltage is reduced by 0.05 V by one time of discharging.

In the above example, the difference in voltage between the unit cell having the highest voltage and the unit cell having the lowest voltage is reduced by 0.05 V + 0.05 V = 0.1 V by one time of charging and discharging. After that, in a case where charging and discharging are repeated in the same manner, like charging to the point D and discharging to the E point and so on, the difference in voltage between the unit cell having the highest voltage and the unit cell having the lowest voltage becomes reduced. As a result, the difference in voltage value between terminals of the plurality of unit cells constituting the assembled battery is corrected, and thus the battery capacity originally possessed by the assembled battery can be exhibited.

Regarding the relationship between the voltage measured by the voltage measuring terminals and the current consumption amount due to the light emission of the light emitting unit of each unit cell, the relationship between the voltage measured by the voltage measuring terminals and the current consumption amount due to the light emission of the light emitting unit may be determined in a stepwise manner. For example, in the above example, there is a method in which the current consumption amount is made to be 20 mA in a case where the voltage is 3.0 V or more and it is made to be 10 mA in a case where the voltage is 2.5 V to 3.0 V.

Further, the relationship between the voltage measured by the voltage measuring terminals and the current consumption amount due to the light emission of the light emitting unit may be determined continuously. For example, a proportional expression, such as (current consumption amount) = k (proportional constant) x V (unit cell voltage), may be set between the voltage and the current consumption amount, and the current consumption amount may be changed in response to the change in voltage of the unit cell.

In the example illustrated in Fig. 5, the light emitting unit is caused to emit light in both the charging process and the discharging process; however, the light emitting unit may be caused to emit light in solely one of the charging process and the discharging process. In addition, regarding the power consumption amount due to the light emission of the light emitting unit in one time of charging process or discharging process, the power consumption amount may be determined in response to the difference in voltage or the relationship of largeness/smallness of voltages of the unit cells at the start of charging or the start of discharging, and the power consumption amount due to the light emitting unit may be set to be constant until the charging process or the discharging process is completed.

### [Second embodiment: Lithium ion battery module]

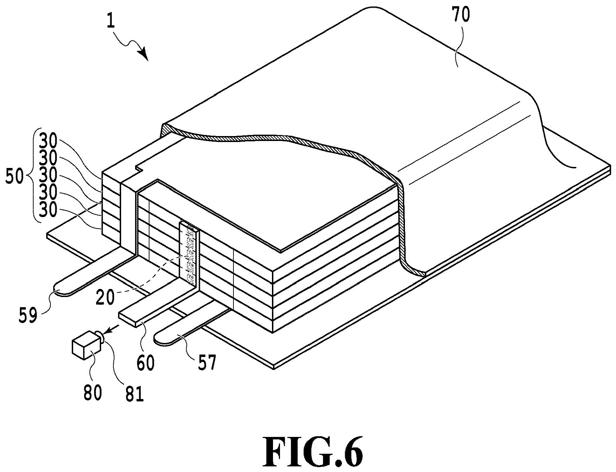

Fig. 6 is a partially cutaway perspective view schematically illustrating an example of a lithium ion battery module. A lithium ion battery module 1 has a plurality of stacked unit cell units 30. Further, the lithium ion battery 1 has an optical waveguide 60 disposed adjacent to or close to the light emitting surface of the light emitting unit 20. Further, the lithium ion battery module 1 has the exterior body 70 that accommodates a plurality of unit cell units 30 and the optical waveguide 60. In the first embodiment, the light emitting unit is used for power consumption; however, in the second embodiment, the light emitting unit is also used for communication with the outside of the lithium ion battery module. In the second embodiment, respective functions may be used in combination together or individually.

The plurality of stacked unit cell units 30 constitute the assembled battery 50. Fig. 6 is the view illustrating a form in which five unit cell units 30 are stacked; however, the number of stacked unit cells may be more than 5 or less than 5. In one implementation example, the number of stacked unit cell units 30 may be 20 or more. The constitutions of each unit cell unit 30 and the assembled battery 50 are the same as those of the first embodiment, and thus the description thereof will be omitted.

The optical waveguide 60 provides a common optical path for optical signals that are output from the light emitting units 20 of the plurality of unit cell units 30. As illustrated in Fig. 2, the optical waveguide 60 that extends in the stacking direction of the unit cells is disposed adjacent to or close to the light emitting surface of the light emitting unit 20. The optical waveguide 60 may be a light guide plate having a width (a length in a direction orthogonal to the stacking direction of the unit cells) sufficient for receiving optical signals from the light emitting units 20. In a case where the optical waveguide 60 is constituted of a light guide plate, the widthwise direction dimension of the optical waveguide 60 may be set to be larger than the maximum dimension (the diameter in a case where the light emitting surface is circular, or the diagonal line in a case where the light emitting surface is rectangular) of the light emitting surface of the light emitting unit 20.

In a case where a light guide plate is used as the optical waveguide 60, the optical waveguide 60 can be disposed to cover all of the light emitting surfaces (matching with a plurality of stacked unit cells, respectively) of the plurality of light emitting units 20. Further, the optical waveguide 60 can be disposed to cover the light emitting direction of the light emitting unit 20 (including a case where the light emitting direction coincides with the vertical direction of the light emitting surface and a case where the light emitting direction is inclined from the vertical direction of the light emitting surface).

Further, in order to increase the coupling efficiency of the optical signal from the light emitting unit 20 to the light guide plate as the optical waveguide 60, an additional component such as a lens may be used, or a light guide plate that has been subjected to condensing processing may be used. Further, it is also possible to use the optical waveguide 60 that extends in a direction orthogonal to the stacking direction of the unit cell. In this case, the light guide plate as the optical waveguide 60 can cover all the light emitting surfaces of the plurality of light emitting units 20, and in a case where the light guide plate has a shape tapered toward the optical output unit, it is possible for a light receiving unit 80 to receive an optical signal that is output from the tapered optical output unit.

The optical waveguide 60 may be an optical fiber, and for example, a tape-type fiber in which a plurality of core wires are bundled may be used. In a case where the light receiving unit 80 is disposed inside the exterior body 70, a space may be provided between the light emitting direction of the light emitting unit 20 and the inner surface of the exterior body 70, and a spatial optical system may be constituted between the light emitting unit 20 and the light receiving unit 80. At this time, in order to increase the coupling efficiency of the optical signal from the light emitting unit 20, an additional component such as a reflecting plate may be used inside the exterior body 70, or the inner surface of the exterior body 70 may be processed as a reflecting surface.

The light emitted from the light emitting unit 20 provided in each of the twenty or more unit cell units 30 disposed adjacent to or close to one optical waveguide 60 is optically coupled to the optical waveguide 60 and emitted from the optical output unit. In the present embodiment, a part of the optical waveguide 60 is led out from the exterior body 70 and becomes an optical output unit that emits the optical signal that has been incident and transmitted from each light emitting unit 20. The optical signal emitted from the optical output unit is received by the light receiving unit 80.

The optical signal emitted from one end of the optical waveguide outside the exterior body is received by the light receiving unit 80. The light receiving unit 80 has a light receiving element 81, and the light receiving element 81 reversely converts the optical signal into an electric signal, and thus it is possible to obtain an electric signal indicating the state inside the unit cell unit 30 included in the assembled battery 50. As the light receiving element 81, an LED element, a phototransistor, or the like can be used, and an LED element is preferable. The light receiving unit 80 may be constituted by using an LED element, which is a light emitting element, as the light receiving element.

In a case where the entire optical waveguide 60 including the optical output unit is accommodated inside the exterior body 70, the optical signal emitted from the optical output unit is received by the light receiving unit 80 disposed inside the exterior body 70.

The light receiving unit 80 disposed to be spaced apart from the assembled battery and the optical waveguide 60 are not electrically connected, and information is transmitted between the light receiving unit 80 and the optical waveguide 60 by an optical signal. That is, it means that the light receiving unit 80 and the assembled battery 50 are electrically insulated from each other.

The exterior body 70 accommodates the assembled battery 50, at least a part of the optical waveguide 60, and at least parts of the lead-out wires 57 and 59. The exterior body 70 can be constituted by using a metal can case or a macromolecule metal composite film. The exterior body 70 is sealed such that the pressure reduction in the inside thereof is maintained.

The control elements 23a and 23b of the light emitting unit 20 are configured to function as a measuring circuit that measures the characteristics of the corresponding unit cell 10 and generates a characteristic signal representing the measured characteristics. For example, a binary signal matching with the voltage that is input to the voltage measuring terminals 24 and 25 is generated as a characteristic signal. The characteristic signal can be generated by converting the voltage that has been input to the voltage measuring terminals into a binary signal by using a look-up table that defines the voltage range and the corresponding signal pattern. Further, the voltage that has been input to the voltage measuring terminal may be converted into an 8-bit (or a 16-bit) binary signal by analog/digital conversion, thereby the characteristic signal being generated.

Similarly, the measuring circuit of the control elements 23a and 23b can convert the output of the temperature sensor connected to the measuring terminal described above into a binary signal or can convert the output of the strain gauge, the piezoelectric element, or the like into a binary signal.

The control elements 23a and 23b are configured to function as a control circuit that outputs a control signal in which a characteristic signal is encoded at every predetermined period. The control signal encoded in a predetermined pattern is supplied to the light emitting unit 20, and the optical signal responding to the control signal is output to the optical waveguide 60. Further, the control elements 23a and 23b encode a unique identifier together with the characteristic signal, add it to the control signal, and then output it to the corresponding unit cell unit 30. Since the optical signal is output based on the control signal in which the identifier is encoded together with the characteristic signal of the corresponding unit cell unit 30, the receiving side can identify which unit cell has propagated the unit cell state information.

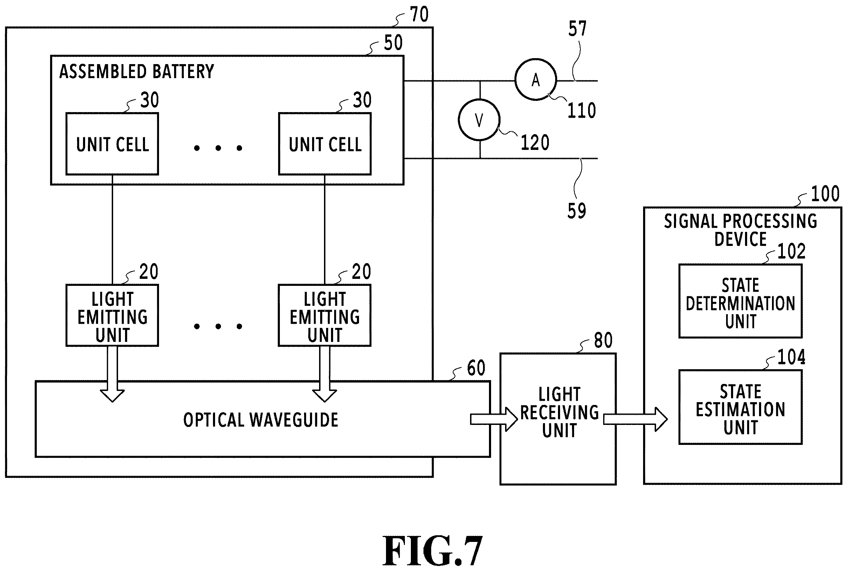

Fig. 7 is a functional block diagram pertaining to an optical communication system for a lithium ion battery module. A signal processing device 100 including a state determination unit 102 and a state estimation unit 104 is connected to the light receiving unit 80. The light receiving unit 80 converts the optical signal received from the optical waveguide 60 into an electric signal, and the signal processing device 100 is configured to determine or estimate the state of the plurality of unit cells by combining the electric signal with additional information described later.

A lithium ion battery 1 module includes a voltmeter 120 for measuring the input/output voltage of the assembled battery, which is connected to the lead-out wire 57 and the lead-out wire 59. Further, the lithium ion battery 1 module includes an ammeter 110 for measuring the input/output current of the assembled battery, which is connected to the lead-out wire 57. The input/output voltage information acquired from the voltmeter 120 and the input/output current information acquired from the ammeter 110 can be used as additional information in a case of determining or estimating the state of the plurality of unit cells.

The signal processing device 100 can also use time series or prior knowledge in a case of determining or estimating the state of the plurality of unit cells. The time series can be an information table in which the states determined by the state determination unit 102 are recorded in chronological order. The prior knowledge can be an information table indicating the correspondence relationship between the preset characteristics (the internal state such as voltage and temperature) of the unit cell and the length of the characteristic signal that is output by a measuring circuit 90, or can be information indicating the state transition of the characteristics (the internal state such as voltage and temperature) of the unit cell. The time series and the prior knowledge can be information recorded on a computer-readable recording medium. The signal processing device 100 may be a computing device having a memory and a processor, and a computer-readable storage medium in which a program that causes the processor to function as the state determination unit 102 and the state estimation unit 104 is recorded. In addition to the program, the information indicating the above-described prior knowledge may be recorded in the computer-readable storage medium.

Next, communication with the outside of the lithium ion battery module will be described. Any method can be applied to the communication method between the plurality of light emitting units 20 and the light receiving unit 80. Since the plurality of light emitting units 20 use the optical waveguide 60 as a common optical path, it is necessary for the light receiving unit 80 to identify which light emitting unit 20 of the unit cell 10 emits the light signal.

It is considered that an oscillation circuit is mounted on the control elements 23a and 23b of each light emitting unit 20 to periodically emit light, and a collision prevention function is added so that a plurality of light emitting units 20 do not emit light at the same time. Further, the wavelength of the light emitting element 22 of each light emitting unit 20 can be changed to carry out wavelength multiplexing communication. Further, the light emitting element 22 of the light emitting unit 20 may be caused to function as a light receiving element, and a light emitting element may be provided in the light receiving unit 80 so that the light emitting unit 20 emits light in response to a request signal from the light receiving unit 80.

Further, the control circuit can output the characteristic signal measured by the measuring circuit, as various types of control signals. As described above, the voltage value itself can be output as a binary signal by the analog/digital conversion. On the other hand, in a case where the number of unit cell units 30 included in the assembled battery 50 is large, it is desirable that the amount of information indicating the characteristics of one unit cell is reduced, whereby the signal can be efficiently output to the signal processing device 100.

First, a case of compressing the amount of information will be described. As described above, the look-up table may be used to convert the binary signal of the voltage value itself into a binary signal having a small number of bits, round it, or omit the high-order digit to generate a binary signal having a reduced number of bits. Further, the voltage values in a predetermined range may be collectively converted into one binary signal. As a specific example, an integer value is allocated to each section, for example, in the following manner; an integer value "1" is allocated to a range from 2.0 V to 2.5 V, and an integer value "2" is allocated to a range from 2.5 V to 3.0 V. Then, the integer values are converted into a binary signal and can be used as a control signal having a predetermined pattern.

Second, a case of thinning out information on the time axis will be described. The control circuit does not always acquire the voltage value of the unit cell 10, but it is set to output a control signal at a predetermined period such as every hour, every 12 hours, or every other day. Further, in the charging process, the control signal may be output at the timing when a predetermined voltage has been exceeded after charging is started, for example, at the timing when 2.0 V is exceeded, and then a control signal may be output at every predetermined period, for example, every 10 to 500 seconds. In the discharging process, the control signal may be set to be output at every predetermined period after the charging of the unit cell 10 is stopped, that is, after the voltage drops from the point where the voltage value is the highest. That is, in the charging process and/or the discharging process, the control signal may be set to be output at every predetermined period after reaching a predetermined voltage.

Further, the control signal can be output by combining the above-described first method and second method. For example, one or a plurality of threshold values may be set, and solely in a case where the measured voltage value exceeds a threshold value or smaller than the threshold value, a control signal having a predetermined pattern may be set to be output. As a specific example, a threshold value is set for every 0.5 V from 2.0 V to 4.5 V, an integer value of +1 to +6 is allocated in a case where the measured voltage value is larger than each threshold value, an integer value of -1 to -6 is allocated in a case where the measured voltage value is smaller than each threshold value, and zero is allocated in a case where there is no change in the measured voltage value. Then, a total of thirteen integer values are converted into a binary signal, whereby a control signal having a predetermined pattern can be obtained.

Also regarding the characteristic signal from the temperature sensor, measured by the measuring circuit, and the characteristic signals from the strain gauge, the piezoelectric element, and the like, the control circuit can reduce the amount of information indicating the characteristic of one unit cell, in the same manner, thereby outputting it to the signal processing device 100.

As described above, the communication with the outside by the control elements 23a and 23b and the light emitting unit 20 can be used not only for monitoring the steady state of the unit cell but also for monitoring the abnormal state. For example, in a case where the temperature of the unit cell, obtained from the temperature sensor, reaches a predetermined value, for example, in a case where the temperature of the unit cell has risen abnormally and reaches a temperature at which a part of the frame member 18 melts, the measuring circuit outputs a characteristic signal responding to the abnormal state. The control circuit can output a control signal so that an optical signal of the light emitting unit 20 with being always turned on, is emitted, unlike the control signal having a predetermined pattern described above. In a case where the light emitting unit 20 of the unit cell in the abnormal state is always turned on, it is possible to easily detect the abnormal state of the unit cell even in the communication to which the optical waveguide which is a common optical path is applied.

Similarly, in a case where the characteristic signal from the voltage measuring terminals, and the characteristic signals from the strain gauge and the piezoelectric element have exceeded a predetermined abnormal value, the control circuit output a control signal so that a characteristic signal responding to the abnormal state, for example, an optical signal of the light emitting unit 20 with being always turned on, is emitted, irrespective of the control signal having a predetermined pattern and the control signal having a predetermined period. Even in communication using an optical waveguide, which is a common optical path, in a case where an abnormality occurs in any unit cell of a plurality of unit cells, it can be detected as an abnormality in the assembled battery, and lithium can be immediately detected. It is possible to detect the presence or absence of an abnormality in the lithium ion battery module.

In the first embodiment, the light emitting unit 20 is used for power consumption. However, in a case where this function is used in combination, it suffices that the predetermined pattern of the first embodiment, determined in response to the measured voltage, and the predetermined pattern of the binary signal generated in the second embodiment is defined in an identifiable manner. In the second embodiment, a unique identifier is added to each unit cell unit 30, and thus the light receiving unit 80 may be configured to distinguish between the light emission for power consumption and the light emission including a characteristic signal, according to the presence or absence of the identifier.

In the second embodiment, the voltage that is input to the voltage measuring terminals 24 and 25 has been described as an example of characteristics of the unit cell 10; however, characteristics due to temperature may be measured by one or more temperature measuring elements which are in contact with and provided on the surface of the positive electrode current collector and the negative electrode current collector or the surface of the unit cell.

According to this embodiment, it is possible to manage the state of the assembled battery while eliminating the need for connecting an electrical wire, and it is possible to identify which unit cell characteristic is exhibited based on the optical signal that is output from the light emitting unit.

### Industrial Applicability

The assembled battery of the present invention can correct the difference in voltage values between terminals of a plurality of unit cells and makes it possible for the original battery capacity of the assembled battery to be exhibited. As a result, it is suitable to be used as a power source for an electric vehicle, a hybrid electric vehicle, or the like, and as a power source for a portable electronic device.

### Reference Signs List

- 10:: unit cell
- 12:: positive electrode
- 13:: negative electrode
- 14:: separator
- 15:: positive electrode active material layer
- 16:: negative electrode active material layer
- 17:: positive electrode current collector
- 18:: frame member
- 19:: negative electrode current collector
- 20:: light emitting unit
- 21:: wiring board
- 22:: light emitting element
- 23a, 23b:: control element
- 24, 25:: measuring terminal
- 30:: unit cell unit
- 50:: assembled battery
- 57, 59:: lead-out wire
- 60:: optical waveguide
- 70:: exterior body
- 80:: light receiving unit
- 81:: light receiving element
- 100:: signal processing device
- 102:: state determination unit
- 104:: state estimation unit
- 110:: ammeter
- 120:: voltmeter

## Claims

1. A lithium ion battery module having an assembled battery formed by connecting a plurality of unit cells, each of which includes a laminated unit and an electrolyte, the laminated unit consisting of one set of a positive electrode current collector, a positive electrode active material layer, a separator, a negative electrode active material layer, and a negative electrode current collector, which are laminated in order, the lithium ion battery module comprising:
a control unit that is configured to receive a characteristic signal representing a characteristic of a corresponding unit cell and to output a control signal obtained by encoding an identifier of the unit cell and the characteristic signal, and a light emitting unit that outputs an optical signal responding to the control signal, the control unit and the light emitting unit being provided in each of the unit cells; and
an optical waveguide that provides a common optical path for optical signals that are output from a plurality of the light emitting units.

2. The lithium ion battery module according to Claim 1,
wherein the control unit includes a measuring circuit that outputs the characteristic signal representing the characteristic of the corresponding unit cell.

3. The lithium ion battery module in response to Claim 2,
wherein the measuring circuit is connected to voltage measuring terminals for measuring a voltage between a positive electrode current collector and a negative electrode current collector of a same unit cell, and
the control unit outputs a control signal such that a predetermined pattern of an optical signal is emitted from the light emitting unit in response to the voltage measured by the voltage measuring terminals.

4. The lithium ion battery module according to Claim 2,
wherein the measuring circuit is connected to voltage measuring terminals for measuring a voltage between a positive electrode current collector and a negative electrode current collector of a same unit cell, and
the control unit outputs a control signal such that the optical signal is emitted from the light emitting unit at each predetermined period after reaching a predetermined voltage.

5. The lithium ion battery module according to Claim 2,
wherein the measuring circuit is connected to voltage measuring terminals for measuring a voltage between a positive electrode current collector and a negative electrode current collector of a same unit cell, and
the control unit outputs a control signal such that the optical signal is emitted from the light emitting unit when the measured voltage reaches a predetermined threshold value.

6. The lithium ion battery module according to Claim 2,
wherein the measuring circuit is connected to a temperature measuring terminal for measuring a temperature of a same unit cell, and
the control unit outputs a control signal such that the optical signal is emitted from the light emitting unit when the measured temperature reaches a predetermined value.

7. The lithium ion battery module according to Claim 2,
wherein the measuring circuit is connected to voltage measuring terminals for measuring a voltage between a positive electrode current collector and a negative electrode current collector of a same unit cell, and a temperature measuring terminal for measuring a temperature of the same unit cell, and
the control unit outputs a control signal such that an optical signal having a predetermined period is emitted from the light emitting unit and outputs a control signal such that an optical signal corresponding to an abnormal state is emitted regardless of the predetermined period when a measured value of the voltage or the temperature exceeds a predetermined value.

8. The lithium ion battery module according to Claim 2,
wherein the measuring circuit is connected to voltage measuring terminals for measuring a voltage between a positive electrode current collector and a negative electrode current collector of a same unit cell, and
the control unit outputs a control signal for causing the light emitting unit to emit light such that a power consumption amount changes in response to a voltage of the unit cell.

9. The lithium ion battery module according to any one of Claims 1 to 8, further comprising:
an exterior body that accommodates the assembled battery and at least a part of the optical waveguide; and
a light receiving unit that is disposed, inside or outside the exterior body, to be spaced apart from the assembled battery,
wherein the light receiving unit and the assembled battery are electrically insulated from each other.

10. The lithium ion battery module according to any one of Claims 1 to 9, further comprising:
a light receiving unit that receives the optical signal and converts the received optical signal into an electric signal; and
a signal processing unit that is configured to process the converted electric signal to determine or estimate a state of each of the plurality of unit cells.
